# EUROPEAN PATENT APPLICATION

(11) **EP 2 052 652 A1**
(43) Date of publication of application: **29.04.2009**
(21) Application number: 08000505.1
(22) Date of filing: 11.01.2008
(51) Int. Cl.: A47J 27/04

(54) **Silicone steamer**

(30) Priority: 27.10.2007 US 983184 P
(71) Applicant: SAR HOLDINGS INTERNATIONAL LIMITED, Tsim Sha Tsui Hong kong (CN)
(72) Inventor: Yeung, Hin Shing Ken, Tsim Sha Tsui Hong Kong (CN)
(74) Representative: Jones Day

(57) **Abstract**

The invention relates to silicone steamers (1) and covers (30) for the steamers, specifically molded silicone steamers and covers, such as lids and tagines, and methods of making of the silicone steamers and covers. The silicone steamers and covers may have heat resistant and retain shape after deformation.

## Description

### FIELD OF THE INVENTION

This invention relates to silicone steamers and covers for the steamers, specifically molded silicone steamers and covers, and methods of making the silicone steamers and covers. The silicone steamers and covers may have high resistances to heat and steam.

### BACKGROUND OF THE INVENTION

Steaming is a method of cooking using steam. Generally, it is a preferred cooking method for health conscious individuals because no cooking oil is needed, thus resulting in a lower fat content. Steaming generally also results in a more nutritious food than boiling because fewer nutrients are destroyed or leached away into the boiling water. Furthermore, it is also easier to avoid burning food by steaming.

Steaming can be used to cook vegetables, meats, grains and combinations thereof. Some non-limiting examples of steamed dishes include steamed fish, steamed pork spare ribs, steamed ground pork or beef patties, dim sum dishes, Chinese buns, steamed cakes and the like.

Steaming is most often done by placing the food into a steamer, which is generally a circular perforated container made of metal or bamboo. The steamer may have a lid for keeping steam inside the container. In general, the bamboo and metal steamers are rigid and inflexible. Furthermore, some steamed foods (e.g., steamed fishes or buns) may stick to surfaces of the steamers when the foods are placed directly on a bamboo or metal steamer. In such circumstances, portions of the steamed foods may be peeled off when they are removed from the steamers. Further, it may not be easy to clean the food stains on the steamers. To prevent steamed foods from sticking to the surfaces of metal or bamboo steamers, generally they are first placed on papers, plates, dishes, or bowls before they are put into the steamers and steamed.

People are always looking for improved steamers that can overcome the above-mentioned disadvantages. Therefore, there is always a need for non-sticking steamers on which sticky steamed foods can be placed directly without the use of papers, plates, dishes, or bowls. Further, there is always a need for steamers that can be cleaned easily. Further, there is also a need for steamers that have high resistances to heat and moisture.

### SUMMARY OF THE INVENTION

Disclosed herein are steamers that are non-sticking and easy to be cleaned, and have high resistances to heat and moisture. Also disclosed herein are covers including tagines for the steamers disclosed herein. In one aspect, disclosed herein are steamers comprising (a) a bottom portion comprising a front side, a back side and a plurality of openings; and (b) a continuous wall around the periphery of the bottom portion and protruding upwardly from the front side, wherein the continuous wall comprises an outer surface, an inner surface and an upper edge, and wherein the steamer comprises a silicone composition.

In another aspect, disclosed herein are tagines comprising (a) a truncated cone-shaped cover portion comprising an outer surface and an inner surface; and (b) a grip protruding upwardly from a central region of the cover portion, wherein the outer surface comprises a plurality of concentric rings, and wherein the tagine comprises a silicone composition.

In some embodiments, the bottom portion of the steamer comprises a plurality of openings in the shape of circles, ovals, triangles, squares, rhombi, rectangles, parallelograms, slits, pentagons, hexagons, octagons, crests or a combination thereof.

In other embodiments, the steamer further comprises a flange around the upper edge of the continuous wall.

In some embodiments, the steamer further comprises a base attached to the back side of the bottom portion. In other embodiments, the bottom portion is circular and each of the continuous wall and the base is independently cylindrical. In further embodiments, the cylindrical base further comprises a plurality of supporting members. In other embodiments, the cylindrical base comprises a plurality of apertures.

In some embodiments, the steamer disclosed herein further comprises a lid or a tagine. In other embodiments, the lid or tagine comprises a grip protruding upwardly from a central region of the lid or tagine.

The lid or tagine may further comprise at least a hole or opening for releasing excess steam from the steamer. In some embodiments, lid or tagine may comprise a plurality of holes or openings.

In some embodiments, the upper surface of the lid or tagine further comprises a plurality of concentric rings.

In some embodiments, the outer surface of the continuous wall further comprises a plurality of rings.

In some embodiments, the inner surface of the tagine comprises at least a lip concentric with the plurality of concentric rings.

In some embodiments, the ratio of the height of the tagine to the diameter of the outer edge of the tagine is from about 4:1 to about 1:4.

In another aspect, disclosed herein are processes of making steamers comprising the steps of (a) providing a silicone composition; and (b) injecting the silicone composition into a mold of the steamer, wherein the steamer comprises a bottom portion comprising a front side, a back side and a plurality of openings; a continuous wall around the periphery of the bottom portion; and a base attached to the back side of the bottom portion.

In another aspect, disclosed herein are processes of making tagines comprising the steps of (a) providing a silicone composition; and (b) injecting the silicone composition into a mold of the tagine, wherein the tagine comprises comprising a truncated cone-shaped cover portion comprising an outer surface and an inner surface; and a grip protruding upwardly from a central region of the cover portion, and wherein the outer surface of the cover portion comprises a plurality of concentric rings.

In some embodiments, the silicone composition disclosed herein comprises a silicone rubber, a liquid silicone rubber (LSR), fluorosilicone rubber, silicone-modified ethylene propylene rubber (SEP rubber), silicone polyester resin, silicone alkyd resin, silicone epoxy resin, or a combination thereof.

In some embodiments, the silicone composition disclosed herein further comprises a natural rubber, a synthetic rubber, a cross-linking agent, a catalyst, a filler, a reinforced material, a colorant, a filler, a dispersant, a surfactant, a wetting agent, a coupling agent, a lubricant, an accelerator, a rheology modifier, a thickener, an adhesion promoter, a plasticizer, an age resister, an anti-oxidant, an anti-foaming agent, an anti-blocking agent, an anti-static agent, an anti-mildew agent, an acid acceptor, a UV stabilizer, a blowing agent, a fire retardant, a desiccant or a combination thereof.

### BRIEF DESCRIPTION OF THE FIGURE

Figure 1 depicts a top view, a front view, a side view, a cross-section and two different elevated views of an embodiment of the steamer disclosed herein.

Figure 2 depicts a front view, a top view, a bottom view, a cross-section and elevated views of an embodiment of the steamer lid disclosed herein.

Figures 3A and 3B depicts two embodiments of the tagine disclosed herein. Figure 3C depicts the tagine of Figure 3A with an outer peripheral region of the cover portion of the tagine inverted upward to expose a circular lip on the inner surface. Figure 3D depicts the tagine of Figure 3A with an outer peripheral region of the cover portion of the tagine inverted upward and then a portion of the outer peripheral region re-inverted downward.

Figure 4A depicts another embodiment of the tagine disclosed herein. Figure 4B depicts the tagine of Figure 4A with an outer peripheral region of the cover portion of the tagine inverted upward to expose a circular lip on the inner surface. Figure 4C depicts the tagine of Figure 3A with an outer peripheral region of the cover portion of the tagine inverted upward and then a portion of the outer peripheral region re-inverted downward.

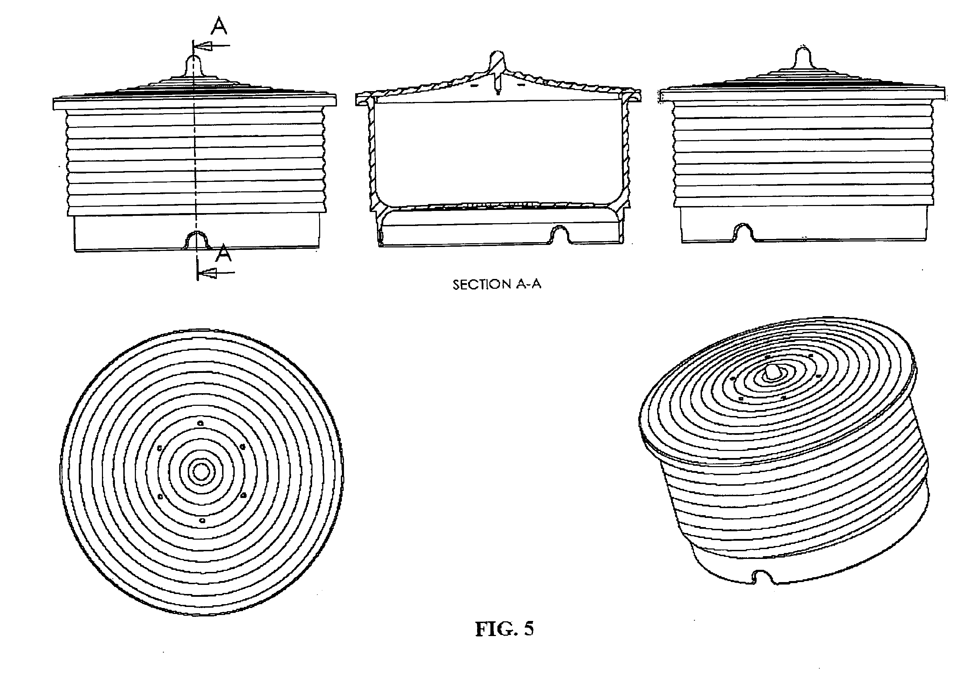

Figure 5 depicts a top view, front view, side view, cross-section and an elevated view of an embodiment of the steamer having a lid disclosed herein.

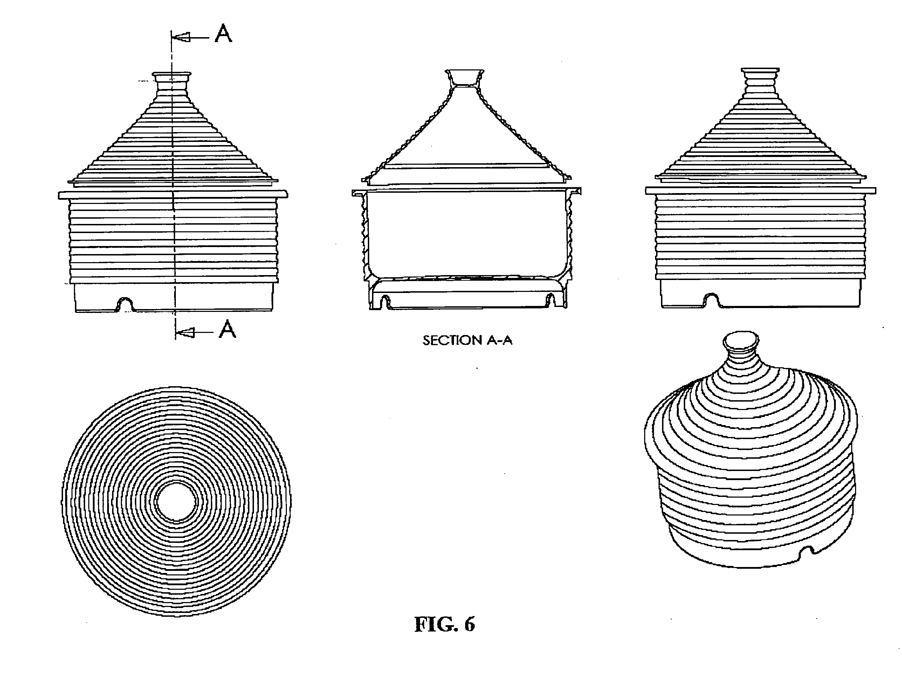

Figure 6 depicts a top view, front view, side view, cross-section and an elevated view of an embodiment of the steamer having a tagine disclosed herein.

### DESCRIPTION OF EMBODIMENTS OF THE INVENTION

In the following description, all numbers disclosed herein are approximate values, regardless whether the word "about" or "approximate" is used in connection therewith. They may vary by 1 percent, 2 percent, 5 percent, or, sometimes, 10 to 20 percent. Whenever a numerical range with a lower limit, R^{L}, and an upper limit, R^{U}, is disclosed, any number falling within the range is specifically disclosed. In particular, the following numbers within the range are specifically disclosed: R=R^{L}+k*(R^{U}-R^{L}), wherein k is a variable ranging from 1 percent to 100 percent with a 1 percent increment, i.e., k is 1 percent, 2 percent, 3 percent, 4 percent, 5 percent,..., 50 percent, 51 percent, 52 percent,..., 95 percent, 96 percent, 97 percent, 98 percent, 99 percent, or 100 percent. Moreover, any numerical range defined by two R numbers as defined in the above is also specifically disclosed.

Disclosed herein are steamers comprising a bottom portion comprising a front side, a back side and a plurality of openings and a continuous wall around the periphery of the bottom portion and protruding upwardly from the front side, wherein the continuous wall comprises an outer surface, an inner surface and an upper edge and wherein the steamer comprises a silicone composition.

The steamer disclosed herein may further comprise a lid or a tagine. Any conventional lid or tagine that form a substantial contact with the upper edge of the continuous wall of the steamer can be used herein. In some embodiments, the lid or tagine comprises a central portion or region. In further embodiments, the central portion of the lid or tagine comprises a grip or protrusion. The grip can be in any convenient shape and size for easy handling of the lid or tagine. In some embodiments, the grip is generally in the shape of a solid or hollow cone, truncated cone, cylinder, sphere, semi-sphere, ellipsoid, spheroid, paraboloid, catenoid, prism, truncated prism, diamond, funnel or a combination thereof. In other embodiments, the grip is in the shape of a solid or hollow cone, truncated cone, cylinder, sphere has an irregular shape.

The bottom portion of the steamer can be in any convenient shape and size. For examples, the bottom portion can be in the shape of a circle, oval, triangle, square, rhombus, rectangle, parallelogram, pentagon, hexagon, or octagon. In some embodiments, the bottom portion is substantially circular. The above-mentioned shapes refer to the shape of the bottom portion when it is viewed without the plurality of holes.

The shape of the continuous wall depends on the shape of the bottom portion. For example, when the bottom portion is circular, the continuous wall is cylindrical in shape. In some embodiments, the ratio of the height of the cylindrical continuous wall to the diameter of the circular bottom portion is from about 10:1 to about 1:10, from about 5:1 to about 1:5, from about 3:1 to about 1:3, from about 2:1 to about 1:2, or from about 1:1 to about 1:2.

In some embodiments, the outer surface of the continuous wall further comprises a plurality of rings. In further embodiments, the cross-section of each of the plurality of rings is semi-circular or semi-oval in shape. In certain embodiments, there is a space between each pair of adjacent rings. In other embodiments, there is no space between each pair of adjacent rings

The plurality of openings may comprise at least 2 openings. In some embodiments, the plurality of openings comprise from about 2 to about 1000 openings. Each of the plurality of openings can be in any convenient shape and size that allows condensed water to drain off. In certain embodiments, the plurality of openings are in the shape of circles, ovals, triangles, squares, rhombi, rectangles, parallelograms, slits, pentagons, hexagons, octagons, crests or a combination thereof.

In other embodiments, the steamer further comprises a flange around the upper edge of the continuous wall. Generally, the flange is designed in a manner such that it can form a substantially close contact or a seal with the edge of a lid or the cover portion of a tagine.

In some embodiments, the steamer further comprises a base attached to the back side of the bottom portion. In other embodiments, the base comprises a plurality of apertures or openings. The base can be in any convenient shape and size. In certain embodiments, the base is cylindrical in shape. In some embodiments, the base further comprises a plurality of legs. The legs can be in any convenient shape and size. In certain embodiments, the legs have the shape of a rectangular bar, cylindrical bar, or triangular bar. In other embodiments, the legs have a shape of a reverse pyramid. In further embodiments, the legs are in the shape of a sphere or half-sphere. In some embodiments, the base or the legs are located at the periphery of the back side of the bottom portion. In other embodiments, the legs are located at the inner area of the back side of the bottom portion.

In some embodiments, the base further comprises a plurality of supporting members. The supporting members can have any convenient form, shape, and size. In some embodiments, the supporting members are in the shape of a bar, a strip, or a rib. In other embodiments, the supporting members are in the shape of an elongated bar, an elongated strip, or an elongated rib. In some embodiments, the supporting members are straight. In other embodiments, the supporting members are curved. The supporting members may be arranged in any directions. In some embodiments, the supporting members are arranged in parallel directions. In other embodiments, the supporting members are arranged in crossed directions. In further embodiments, the supporting members are arranged randomly.

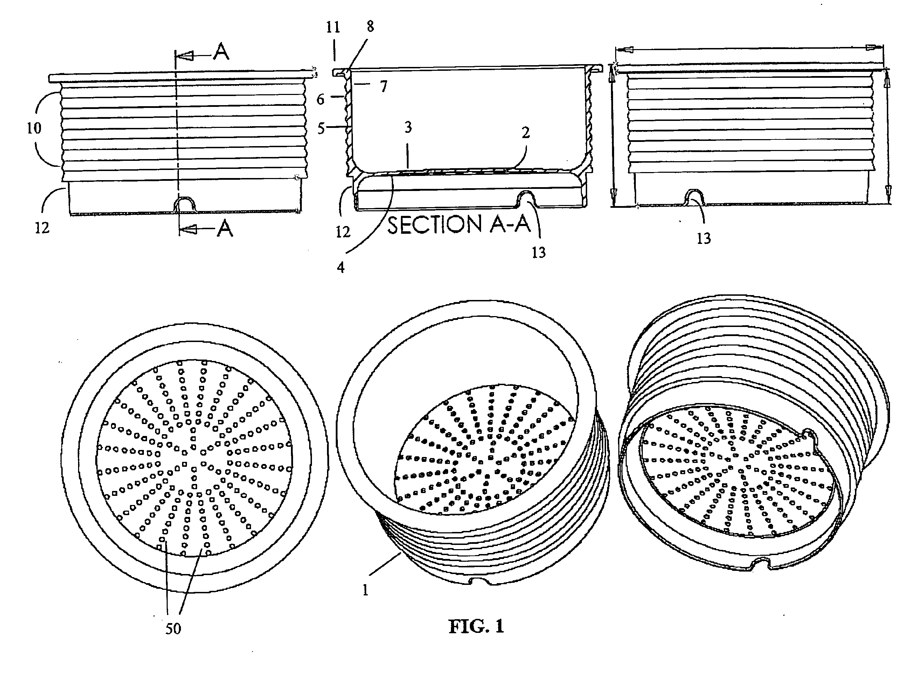

FIG. 1 depicts an embodiment of the steamer disclosed herein. The steamer **1** comprises a circular bottom portion **2** which has a front side **3,** a back side **4** and a plurality of openings **50.** The steamer **1** also comprises a cylindrical continuous wall **5** around the periphery of the circular bottom portion 2. The cylindrical continuous wall **5** comprises an outer surface **6,** an inner surface **7** and an upper edge **8.** The outer surface **6** of the continuous wall **5** further comprises a plurality of rings **10.** The cross-section of each of the plurality of rings **10** is semi-oval in shape. The steamer 1 further comprises a flange **11** around the upper edge **8** of the continuous wall **5.** The steamer **1** further comprises a cylindrical base **12** attached to the back side **4** of the bottom portion **2.** The cylindrical base **12** comprises a plurality of apertures or openings **13.**

The lid or tagine may comprise at least one hole or opening for releasing excess steam from the steamer. In some embodiments, the lid or tagine may comprise a plurality of holes or openings. In other embodiments, the lid or tagine may comprise from about 1 to about 50 holes or openings. The plurality of holes or openings can be in any convenient shape or size. In certain embodiments, the plurality of holes or openings are in the shape of circles. In further embodiments, each of the circles has a diameter from about 0.25 mm to about 10 mm, from about 0.5 mm to about 7.5 mm, or from about 0.5 mm to about 5 mm.

In some embodiments, the outer surface of the lid or the outer surface of the cover portion of the tagine further comprises a plurality of concentric rings. In certain embodiments, there is a space between each pair of adjacent concentric rings. In other embodiments, there is no space between each pair of adjacent concentric rings.

Tagines disclosed herein may comprise (a) a truncated cone-shaped cover portion comprising an outer surface and an inner surface; and (b) a grip protruding upwardly from a central region of the cover portion, wherein the outer surface comprises a plurality of concentric rings, and wherein the tagine comprises a silicone composition.

In some embodiments, the inner surface of the cover portion of the tagine comprises at least one circular lip concentric with the plurality of concentric rings. In other embodiments, an outer peripheral region of the cover portion of the tagine can be inverted upward to expose an inner circular lip so that the inner circular lip can engage with the upper edge of the continuous wall of the steamer.

In some embodiments, the ratio of the height of the tagine to the diameter of the outer edge of the tagine is from about 10:1 to about 1:10, from about 8:1 to about 1:8, from about 6:1 to about 1:6, from about 4:1 to about 1:4, from about 3:1 to about 1:3, from about 2:1 to about 1:2, from about 1.5:1 to about 1:1.5, or from about 1.25:1 to about 1:1.25.

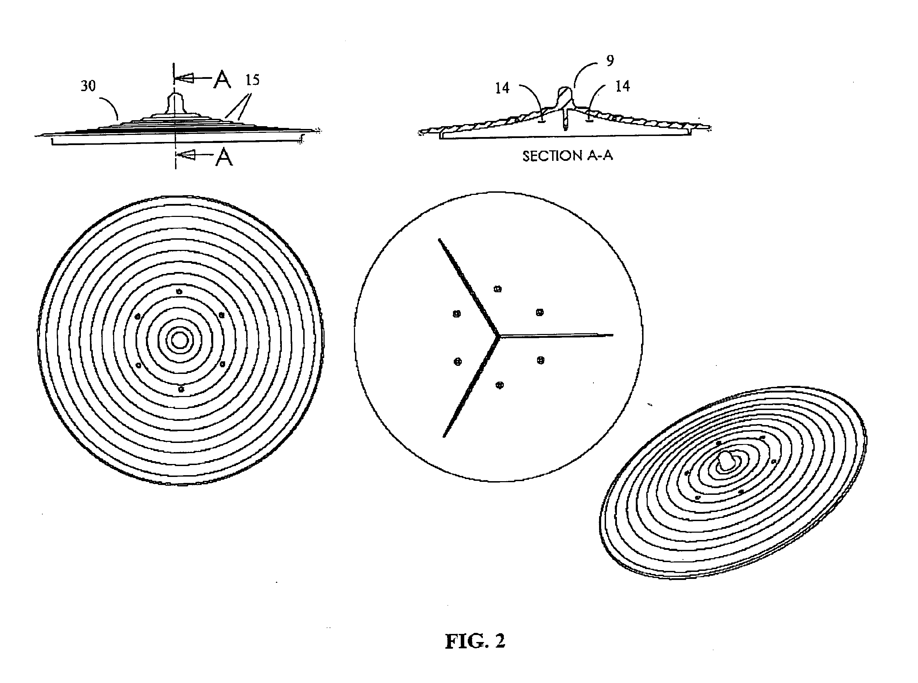

FIG. 2 depicts an embodiment of the steamer lid disclosed herein. The steamer lid **30** comprises a grip or protrusion **9** at its central portion and a plurality of holes or openings **14** for releasing excess steam from the steamer **1.** The outer surface of the lid **30** further comprises a plurality of concentric rings **15.**

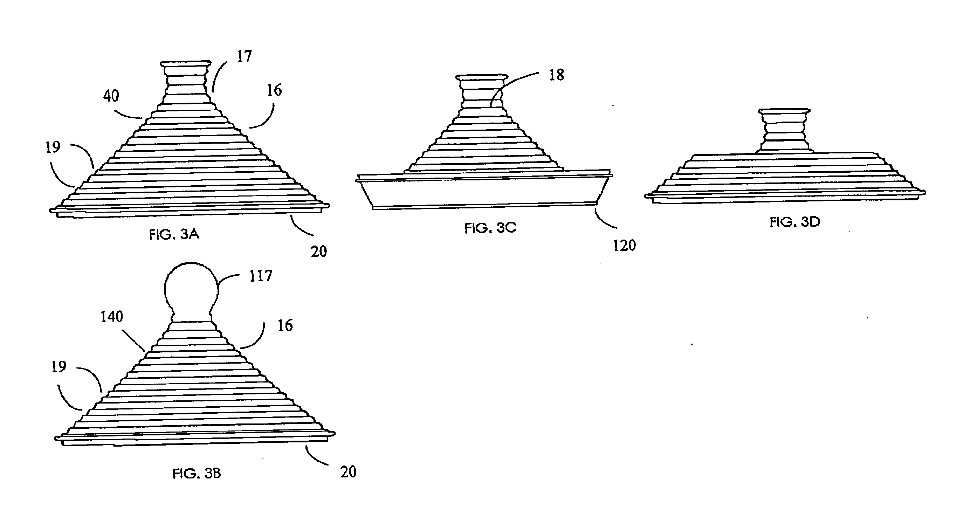

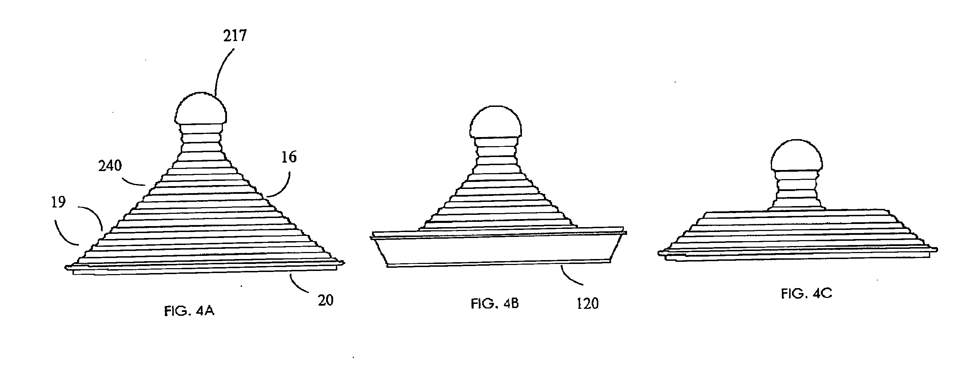

FIG. 3A, 3B and 4A depicts to three embodiments of the tagine disclosed herein. Tagines **40, 140** and **240** have a truncated cone-shaped cover portion **16,** a plurality of concentric rings **19,** and a circular lip **20** concentric with the plurality of concentric rings **19.** The cross-section of each of the plurality of rings **10** is semi-oval in shape. Tagine **40, 140** or **240** has respectively a grip **17, 117** or **217** protruding upwardly from a central region **18** of the cover portion **16.**

FIG. 3C and 4B depicts to two embodiments of the tagine wherein an outer peripheral region of the cover portion 16 of the tagine is inverted upward to expose the an inner circular lip **120** so that the inner circular lip **120** can engage with the upper edge **8** of the continuous wall **5** of the steamer **1.**

The silicone composition may comprise a silicon-containing polymer or prepolymer that can be cured or cross-linked to form a silicon-containing polymer. One of the common silicon-containing polymers is silicone. Silicone is also known as polymerized siloxanes or polysiloxanes. Some non-limiting example of silicone include polydimethylsiloxane, polymethylhydrosiloxane, fluorosilicones, phenylmethyl-dimethyl silicones, and the like. Silicones have the chemical formula -[Si(R)₂-O]ₙ-, where R is one or more organic groups such as methyl, ethyl, and phenyl and n refers to the number of the repeating units in the backbone of the silicone polymer. In some embodiments, organic side groups can be used to link two or more -Si-O- backbones together. By varying the -Si-O-chain lengths, side groups, and crosslinking, silicones can be synthesized with a wide variety of properties and compositions.

Silicone generally is a flexible material that is widely used for gaskets, heat shields, fire stops, seals, cushions and insulation. Hardened silicone has a high temperature resistance (up to about 320 °C), excellent sealability, UV and ozone resistance, and excellent recovery after compression. Furthermore, silicone is extremely resilient to mechanical fatigue, meaning that the material can be flexed repeatedly without losing strength or elasticity. Silicone maintain their mechanical properties over a wide range of temperatures and the presence of hydrocarbon side chains in silicone rubbers makes these materials extremely hydrophobic. Because of its anti-sticking, low chemical reactivity, and low toxicity, silicone is an excellent choice for bakewares and cookwares such as steamers.

Silicone can vary in consistency from liquid to gel to rubber to hard plastic. The most common silicone is linear polydimethylsiloxane (PDMS), which is a silicone oil. Another common group of silicone materials includes silicone rubbers or resins, which are generally formed by branched and/or cage-like oligosiloxanes.

In some embodiments, the silicone composition disclosed herein comprises a silicon-containing polymer such as a silicone rubber, a liquid silicone rubber (LSR), fluorosilicone rubber, silicone-modified ethylene propylene rubber (SEP rubber), silicone polyester resin, silicone alkyd resin, silicone epoxy resin, or a combination thereof. In some embodiments, the silicone rubber disclosed herein is a one-component RTV rubber, a two-component RTV rubber, a silicone rubber compound, or a combination thereof.

In some embodiments, the silicone composition disclosed herein comprises a silicone rubber. Any conventional silicone rubber can be used herein. In some embodiments, the silicone rubber has the general formula (I):

RₐSiO_{(4-a)/2} (I)

where R is a substituted or unsubstituted monovalent hydrocarbon radical having 1 to 10 carbon atoms and a is a positive number having a value of from about 1.95 to about 2.05. In some embodiments, each R is independently alkyl such as methyl, ethyl, propyl, and butyl; alkenyl such as vinyl, allyl, and butenyl; aryl such as phenyl and tolyl; or substituted alkyl, alkenyl or aryl where one or more of the hydrogen atoms attached to the carbon atoms of the alkyl, alkenyl or aryl are substituted with halogen atoms, cyano, chloromethyl, chloropropyl, 3,3,3-trifluoropropyl, 2-cyanoethyl or the like. The radicals represented by R may be the same or different. In certain embodiments, a of formula (I) is 2.

In certain embodiments, the silicone rubber has the general formula (II): 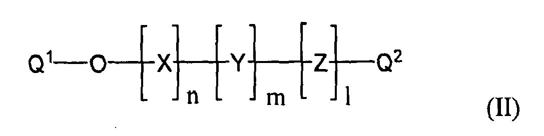 wherein each of Q¹ and Q² independently is monovalent radical having one of the following formulae: 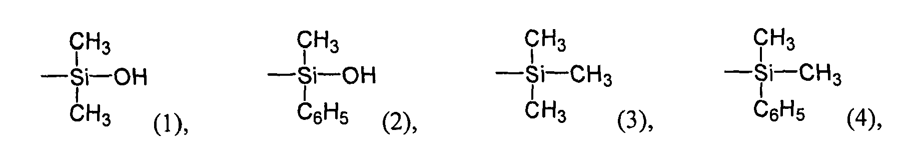 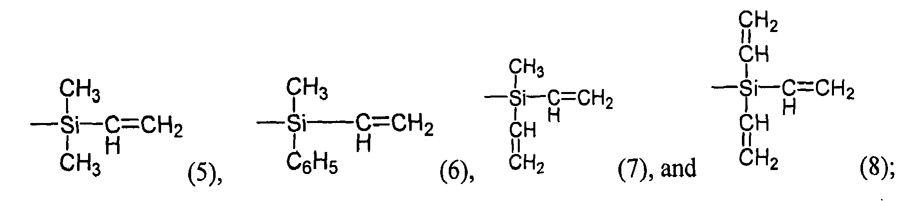 each of X, Y and Z independently is a divalent radical having one of the following formulae: 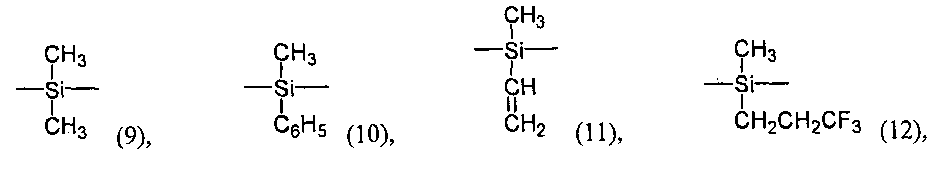 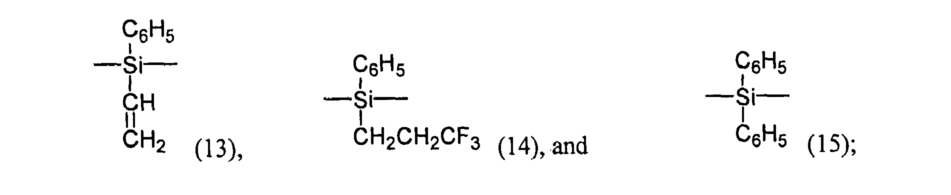 and each of n, m, and 1 is independently an integer from 0 to 10,000.

In some embodiments, the silicone rubber has formula (II) where I is 0 and X is divalent radical (9); and Y is divalent radical (11). In other embodiments, the silicone rubber has formula (II) where X is divalent radical (10); Y is divalent radical (9); and Z is divalent radical (11). In other embodiments, the silicone rubber has formula (II) where X is divalent radical (12); Y is divalent radical (9); and Z is divalent radical (11).

Generally, silicone rubber offers excellent resistance to extreme temperatures and can be used in a temperature range from about -55 °C to about 300 °C. In such temperature range, their tensile strength, elongation, tear strength and compression set can be superior to conventional natural or synthetic organic rubbers.

In general, silicone rubber is a highly inert material and does not react with most chemicals. Further, silicone rubber has higher resistances to ozone, UV light, heat, humidity, and other aging factors than any organic rubber. These chemical inertness makes silicone rubber the material of choice in medical applications and applications in extreme environments.

There are also many special grades and forms of silicone rubber, including: Steam resistant, metal detectable, glow-in-the-dark, electrically conductive, chemical/oil/acid/gas resistant, low smoke emitting, and flame-retardant.

In some embodiments, the silicone composition disclosed herein comprises a silicone rubber, such as general purpose silicone rubbers, one-component RTV silicone rubbers and two-component RTV silicone rubbers. Any conventional silicone rubbers known to skilled artisans can be used herein. The silicone rubber can be milled with at least one additive such as colorants and cross-linking agents to form a silicone composition. The silicone composition can then be extruded or injected into a mold under pressure and then processed into silicone articles such as steamers and tagines. Generally, the machine pressure on the mold can be from about 20 Kg to about 300 Kg, from about 40 Kg to about 275 Kg, from about 50 Kg to about 250 Kg, from about 60 Kg to about 200 Kg, or from about 70 Kg to about 175 Kg.

Optionally, heat can be applied to vulcanize or cure the silicone composition or article. Generally, the heat cure can be carried out in a two stage process at the mold to form the desired shape first, and then in a prolonged post-cure process after the article is removed from the mold. Generally, the curing temperature at the mold is from about 120 °C to about 200 °C, from about 140 °C to about 180 °C, or from about 150 °C to about 170 °C. The curing time at the mold can be from about 10 seconds to about 500 seconds, from about 25 seconds to about 400 seconds, from about 50 seconds to about 300 seconds, from about 75 seconds to about 200 seconds, or from about 100 seconds to about 150 seconds.

The post-cure temperature generally is from about 150 °C to about 300 °C, from about 160 °C to about 275 °C, from about 170 °C to about 250 °C, or from about 180 °C to about 225 °C. The post-cure time can be from about 10 minutes to about 24 hours, from about 20 minutes to about 16 hours, from about 30 minutes to about 10 hours, from about hour to about 8 hours, or from about 2 hours to about 6 hours. In some embodiments, the curing temperature at the mold is from about 155 °C to about 165 °C. In other embodiments, the post-cure temperature is from about 200 °C to about 210 °C. In further embodiments, the curing time is from about 120 seconds to about 140 seconds. In still further embodiments, the post-cure time is from about 3 hours to about 5 hours.

Some non-limiting examples of suitable silicone rubbers for general purposes include KE-541-U, KE-551-U, KE-571-U, KE-581-U, KE-555-U, KE-575-U, KE-520-U, MF940U, MF950U, MF960U, and MF970U. Some non-limiting examples of suitable one-component RTV silicone rubber include KE-41, KE-42, KE-44, KE-45, KE-441, KE-445, and KE-45S. Some non-limiting examples of suitable two-component RTV silicone rubber include KE-12, KE-14, KE-17, KE-108, KE-111, KE-1222, KE-1241, KE-1414, KE-1415, KE-1416, KE-1417, KE-1314, KE-1600, KE-1603, and KE-1606. All of the above-mentioned silicone rubbers are obtainable from Shin-Etsu Chemical Co., Ltd., Tokyo, Japan.

In some embodiments, the silicone composition disclosed herein comprises a liquid silicone rubber (LSR). Any conventional LSR can be used herein. Liquid silicone rubber is a cured silicone with low compression, great stability and ability to resist extreme temperatures such as from about -55 °C to about 300 °C. A variety of liquid silicone rubbers are available with a wide range of physical properties and that can be tailored to specific applications. Liquid silicone rubber may be addition-crosslinked by hydrosilylation in the presence of a platinum catalyst to form a silicone elastomer. Liquid silicone rubber compositions may be formed by mixing four essential ingredients: a substantially linear silicone polymer, one or more reinforcing filler(s) and optionally one or more non-reinforcing filler(s), a cross-linking agent, and a hydrosilylation catalyst. The mechanical properties, such as tensile strength, elongation, tear strength, and compression set, of the liquid silicone rubber compositions may be evaluated. Silicone articles, such as silicone steamers and tagines, may be formed from the liquid silicone rubber compositions by a liquid injection molding system (LIMS). Liquid injection molding (LIM) is a process that involves an integrated system for proportioning, mixing, and dispensing a liquid resin formulation and directly injecting the liquid resin formulation into a mold which is clamped under pressure. In some embodiments, a two-part liquid silicone composition comprising a liquid silicone rubber, a catalyst, a crosslinker and optionally at least one additive is directly delivered into a mixer for homogenization. The homogenized mix is then injected directly into heated mold cavities in a period ranging from about 2 to about 30 seconds, or from about 3 to about 10 seconds. Vulcanization or curing occurs inside the mold cavities a period ranging from about 1 second to about 90 seconds, or from about 5 seconds to about 90 seconds.

Any LIMS known to skilled artisans can be used herein. In some embodiments, silicone articles, such as silicone steamers and tagines, can be prepared by a high-precision injection molding machine where all steps are automated, from mixing to molding. The automated system may save labor and time, and make it easy to produce high-quality molded articles. LIMS may provide some advantages over other polymer processing methods. For example, it may save time because the cure speed is fast and molding time can be reduced, especially when addition-cure liquid silicones are used. Furthermore, the liquid injection molding can be done at low injection pressures because the materials are liquids.

The LIMS is suitable for molding high-precision components and flashless, runnerless molding. Because molded silicone articles release easily from the molds after curing, the molding process can be automated. The system is environmentally friendly, as there are no byproducts generated during curing. With flashless and runerless molding, there is no need to process waste material, meaning a more environmentally friendly manufacturing process.

Some non-limiting examples of suitable liquid silicone rubbers include KEG-2000-40 (A/B), KEG-2000-50 (A/B), KEG-2000-60 (A/B), KEG-2000-70 (A/B), KEG-2001-40 (A/B), KEG-2001-50 (A/B), which are suitable for fast cure, transparent, and high strength applications; KE-1950-10 (A/B), KE-1950-20 (A/B), KE-1950-30 (A/B), KE-1950-35 (A/B), KE-1950-40 (A/B), KE-1950-50 (A/B), KE-1950-60 (A/B), KE-1950-70 (A/B), which are suitable for transparent and high strength applications; KE-1935 (A/B), KE-1987 (A/B), KE-1988 (A/B), which are suitable for high transparency applications; and KE-2014-30 (A/B), KE-2014-40 (A/B), KE-2014-50 (A/B), KE-2014-60 (A/B), which are suitable for oil bleed applications. All of the above-mentioned liquid silicone rubbers are obtainable from Shin-Etsu Chemical Co., Ltd., Tokyo, Japan.

In some embodiments, the silicone composition disclosed herein comprises a fluorosilicone rubber. Any conventional fluorosilicone rubber can be used herein. Flurosilicone rubber generally has a high resistance to extreme temperatures and chemicals, and has excellent workability. Flurosilicone rubber also has an excellent resistance to solvent, oil or silicone fluid. Some non-limiting examples of suitable fluorosilicone rubbers include the FE-201-U Series for general molding purposes and the FE-301-U Series for high strength applications, all of which are obtainable from Shin-Etsu Chemical Co., Ltd., Tokyo, Japan. Other non-limiting examples of suitable fluorosilicone rubbers include FE-251-U, FE-261-U, FE-271-U, FE-351-U, FE-361-U, and FE-451-U, all of which are obtainable from Shin-Etsu Chemical Co., Ltd., Tokyo, Japan.

In some embodiments, the silicone composition disclosed herein comprises a silicone-modified ethylene propylene rubber (SEP rubber). Any conventional SEP rubber can be used herein. SEP rubber is produced by modifying ethylene propylene rubber (EPDM) with silicone. The modification improves the heat resistance, weather resistance, and low temperature characteristics of EPDM's. These properties of SEP rubber generally lie between those of EPDM and silicone rubber, but SEP rubber has the additional favorable properties of chlorine resistance and sponge foaming characteristics. In high temperature conditions over 100 °C, SEP rubber generally has a higher mechanical strength, in particular tear strength, than EPDM, and is comparable to high-strength silicone rubber. In terms of resistance to steam, hot water, acids, and alkalis, SEP rubber is generally more durable than silicone rubbers. SEP rubbers are available in several grades, e.g., general grade, heat-resistant grade, extrusion grade, flame-resistant grade, and solar grade. Some non-limiting examples of general grade SEP rubbers include SEP-1711-U and SEP-1411-U. Some non-limiting examples of heat-resistant grade SEP rubbers include SEP-1721-U, SEP-1421-U, and SEP-855B-U. One non-limiting example of extrusion grade SEP rubber includes SEP-1731-U. One non-limiting examples of flame-resistant grade SEP rubber includes SEP-363-U. One non-limiting examples of solar grade SEP rubber includes SEP-1631-U. All of the above SEP rubbers are obtainable from Shin-Etsu Chemical Co., Ltd., Tokyo, Japan.

In some embodiments, the silicone composition disclosed herein comprises a silicone polyester resin, silicone alkyd resin, or silicone epoxy resin. Any conventional silicone polyester resin, silicone alkyd resin and silicone epoxy resin known by skilled artisans can be used herein. Some non-limiting examples of silicone polyester resins include KR-5230 and KR-5230, obtainable from Shin-Etsu Chemical Co., Ltd., Tokyo, Japan. One non-limiting example of silicone alkyd resin include KR-5206, obtainable from Shin-Etsu Chemical Co., Ltd., Tokyo, Japan. Some non-limiting examples of silicone epoxy resins include ES-1001N, ES-1002T, and ES-1023, obtainable from Shin-Etsu Chemical Co., Ltd., Tokyo, Japan.

In some embodiments, the mechanical properties and/or physical properties of the silicone composition can be modified or improved by adding one or more non-silicon containing rubber materials, such as natural rubber, synthetic rubber or a combination thereof. Some non-limiting examples of suitable synthetic rubbers include the butadiene polymers such as polybutadiene; isobutylene rubber (butyl rubber); ethylene-propylene rubber; neoprene (polychloroprene); polyisoprene; copolymers of 1,3-butadiene or isoprene with monomers such as styrene, acrylonitrile and methyl methacrylate; ethylene/propylene/diene (EPDM) rubbers such as ethylene/propylene/dicyclopentadiene terpolymers. Non-limiting examples of suitable butadiene polymers include those polymers having rubber-like properties, prepared by polymerizing butadiene alone or with one or more other polymerizable ethylenically unsaturated compounds, such as styrene, methylstyrene, methyl isopropenyl ketone and acrylonitrile. In some embodiments, the butadiene may be present in the mixture in an amount of at least 40 wt.%, based on the total amount of the polymerizable materials.

Optionally, the silicone composition may comprise one or more suitable additives such as cross-linking or curing agents, colorants (e.g., pigments and dyes), catalysts, fillers, reinforced materials, dispersants, surfactants, wetting agents, coupling agents, lubricants, accelerators, rheology modifiers, thickeners, adhesion promoters, plasticizers, age resisters, anti-oxidants, antifoaming agents, blocking agents, antistatic agents, anti-mildew agents, handling agents, acid acceptors, UV stabilizers, anti-adhesive agents, blowing agents, fire retardants, desiccants, and the like. The mechanical properties such as compression set, tensile strength and flexibility of the silicone composition disclosed herein can be adjusted by controlling, *inter alia,* the type and amount of the silicon-containing polymer, the curing agent, the filler and/or the reinforced material.

The cross-linking or curing agent can be a peroxide, metallic salt or a combination thereof. Some non-limiting examples of suitable cross-linking or curing agent include organic peroxides such as acyl peroxides (e.g., acetyl and benzoyl peroxides), alkyl peroxides (e.g., t-butyl peroxide and cumyl peroxide), dicarbonates, hydroperoxides (e.g., t-butyl hydroperoxide and cumyl hydroperoxide), peresters (e.g., t-butyl perbenzoate), azo compounds (e.g., 2,2'-azobisisobutyronitrile), disulfides, tetrazenes and combinations thereof.

Other non-limiting examples of suitable organic peroxide include monochlorobenzoyl peroxide, p-methylbenzyol chloride, 2,4-dichlorobenzoyl peroxide, t-butyl perbenzoate, dicumyl peroxide, 2,5-bis(t-butylperoxy)-2,5-dimethylhexane, 2,5-bis(t-butylperoxy)-2,5-dimethylhexine. Some non-limiting examples of suitable dicarbonates include dimyristyl peroxydicarbonate and dicyclododecyl peroxydicarbonate, t-butyl monoperoxycarbonates, and compounds having formula (III): 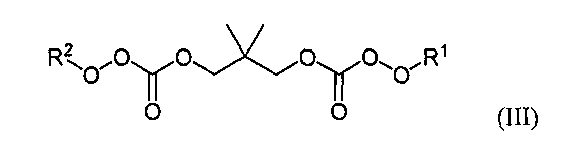 wherein each of R¹ and R² is independently alkyl having about 3 to about 10 carbon atoms.

Some suitable commercially available cross-linking or curing agents include C-1A, C-3, C-4, C-8, C-8A, C-8B, C-10, C-15, C-16, C-23, C-25A/B, and SHK-158, all of which are obtainable from Shin-Etsu Chemical Co., Ltd., Tokyo, Japan.

In some embodiments, the amount of the cross-linking or curing agent ranges from about 0.2 parts to about 5 parts, from about 0.3 parts to about 4 parts, from about 0.4 parts to about 3 parts, from about 0.5 parts to about 2.5 parts, from about 0.5 parts to about 2.5 parts, from about 0.75 parts to about 2 parts, or from about 1.25 parts to about 1.75 parts per 100 parts of the silicon composition. In other embodiments, the amount of the cross-linking or curing agent is at most about 0.5 parts, at most about 0.75 parts, at most about 1.0 part, at most about 1.5 parts, at most about 2.0 parts, or at most about 3.0 parts per 100 parts of the silicon composition. In further embodiments, the amount of the cross-linking or curing agent is at least about 0.1 parts, at least about 0.2 parts, at least about 0.3 parts, at least about 0.4 parts, at least about 0.5 parts, or at least about 0.6 parts per 100 parts of the silicon composition.

In some embodiments, the silicone composition can be cured by a conventional addition reaction curing agent. Some non-limiting examples of suitable addition reaction curing agent include organohydrogenpolysiloxanes having at least two or at least three Si-H groups in a molecule. Some non-limiting examples of suitable organohydrogenpolysiloxanes include methylhydrogenpolysiloxane and copolymers of methylhydrogenpolysiloxane and dimethylpolysiloxane. In general, the organohydrogenpolysiloxane can be blended in the silicone composition in an amount from about 0.5 moles to about 3 moles of Si-H groups per mole of alkenyl group in the silicone composition.

Generally, a catalyst can be used together with the addition reaction curing agent. Some non-limiting examples of suitable catalysts include chloroplatinic acid, alcohol-modified products of chloroplatinic acid, complexes of chloroplatinic acid with ethylene or propylene, and complexes of chloroplatinic acid with vinylsiloxane. The addition reaction catalyst can be blended to give from about 0.1 ppm to 1,000 ppm, or from about 1 ppm to about 500 ppm of platinum metal, based on the total weight of the silicone composition.

The silicone composition may include a sulfur vulcanizing agent, especially where the silicone composition comprises a natural rubber or a synthetic rubber. Examples of suitable sulfur vulcanizing agents include elemental sulfur or sulfur donating vulcanizing agents. In some embodiments, the sulfur vulcanizing agent is elemental sulfur. Other cross-linking agents may also be used.

In some embodiments, the silicone composition further comprises a reinforced material. Any rubber reinforced material that can strengthen silicone composition can be used, including, but not limited to, polyesters, polyamides (e.g., nylons and aramid), polyvinyl alcohol, carbon, glass, steel (brass, zinc or bronze plated), polybenzoxazole, rayon, and other organic or inorganic compositions. These rubber reinforced materials may be in the form of a filament, fiber, thread, cord, sheet or fabric. In some embodiments, the rubber reinforced material comprises glass fibers. In some embodiments, the rubber reinforced material is a fiber sheet comprising one or more fibers that is stable in the temperature ranges to be used. The reinforced fiber material may be nylon, polyester, aramid, acrylic, polyurethane, olefin, polylactide, fiberglass, airlaid fabrics, and the like. In other embodiments, the reinforced glass fiber is coated with adhesion promoters and liquid silicone prior to use.

The silicone composition may also comprise one or more colorants. Any conventional colorants may be used herein. Some non-limiting examples of suitable colorants include KE-Color BR, KE-Color W, KE-Color MB, KE-Color BL, KE-Color SB, X-93-941, and X-93-942, obtainable from Shin-Etsu Chemical Co., Ltd., Tokyo, Japan. Some non-limiting examples of suitable colorants include ZSB 336, ZSA 101, ZSZ924, ZSA101, ZSB216, ZSB630, ZSB631, ZSB632, ZSB633, and ZSB634, obtainable from Holland Colours China Ltd. The colorant can used individually or in combination with one or more other colorants to provide all possible colors, shades or hues for the silicone articles disclosed herein. Some non-limiting examples of suitable colors include red, orange, yellow, green, blue, indigo, purple, pink, silver, gold, bronze, brown, black, gray, pale champagne, white, and all known shades and hues thereof.

Optionally, the silicone composition may comprise one or more fillers. Any conventional filler for silicone compositions may be used herein. Some non-limiting examples of suitable fillers include metal oxides, metal nitrides, metal carbonates, metal silicates, metal powder, pulverized mica, aluminum hydroxide, carbon black, asbestos, glass wool, and combinations thereof. Some non-limiting examples of suitable metal oxides include silica, alumina, titania, magnesium oxide, barium oxide, cerium oxide, zinc oxide, iron oxide and the like. Some non-limiting examples of suitable metal nitrides include boron nitride, aluminum nitride, silicon nitride, silicon carbide, and the like. Some non-limiting examples of suitable metals include aluminum, copper, silver and the like. Some non-limiting examples of suitable metal carbonates include calcium carbonate, zinc carbonate and the like. Some non-limiting examples of suitable metal silicates include aluminum silicates, magnesium silicates, zinc silicates, iron silicates and the like. Some non-limiting examples of suitable carbon black include acetylene black, furnace black, channel black and the like.

In some embodiments, the filler is silica in the form of finely divided powder. The filler may be added for the purposes of modifying the properties and/or processability of the silicone composition. Some non-limiting examples of suitable silica include fumed silica, wet milled silica, powder of fused silica, finely divided quartz, diatomaceous earth, and mixtures thereof. The fumed silica or wet milled silica can be surface-treated to form hydrophobic silica. In some embodiments, the surface area of the silica filler is at least about 1 m²/g, at least about 10 m²/g, at least about 20 m²/g, at least about 30 m²/g, at least about 40 m²/g, or at least about 50 m²/g, as measured by the BET (Brunauer-Emmet-Teller) method of measuring surface area, as described by S. Brunauer, P. H. Emmett, and E. Teller, Journal of the American Chemical Society, 60, 309 (1938), which is incorporated herein by reference. In other embodiments, the surface area of the silica filler is from about 1 m²/g to about 500 m²/g, from about 2 m²/g to about 400 m²/g, from about 5 m²/g to about 300 m²/g, from about 10 m²/g to about 200 m²/g, or from about 25 m²/g to about 100 m²/g, as measured by the BET method.

The finely divided silica filler can be added to the silicone composition disclosed herein in an amount from about 1 part to about 30 parts by weight, from about 2 parts to about 15 parts by weight, or from about 3 parts to about 10 parts by weight, based on 100 parts by weight of the silicone composition.

Optionally, the silicone composition comprises a dispersant. Any dispersant that can disperse the filler uniformly in the silicone composition can be used. Some non-limiting examples of suitable dispersants include organosilazanes (e.g., hexamethylsilazane) or organosilanes.

Optionally, the silicone composition comprises a flame retardant. Some non-limiting examples of suitable flame retardants include hydrated aluminum hydroxide, zinc borate, metal silicates such as wollastonite, platinum and platinum compounds.

Optionally, the silicone composition comprises an adhesion promoter. Some non-limiting examples of suitable adhesion promoters include alkoxy silanes such as aminoalkylalkoxy silanes, epoxyalkylalkoxy silanes, for example, 3-glycidoxypropyltrimethoxysilane and, mercapto-alkylalkoxy silanes and γ-aminopropyl triethoxysilane, reaction products of ethylenediamine with silylacrylates isocyanurates containing silicon groups such as 1,3,5-tris(trialkoxysilylalkyl) isocyanurates may additionally be used. Further suitable adhesion promoters are reaction products of epoxyalkylalkoxy silanes such as 3-glycidoxypropyltrimethoxysilane with amino-substituted alkoxysilanes such as 3-aminopropyltrimethoxysilane and optionally alkylalkoxy silanes such as methyl- trimethoxysilane epoxyalkylalkoxy silane, mercaptoalkylalkoxy silane, and derivatives thereof.

The silicone composition may also comprises one or more accelerators. Accelerators can be used to control the time and/or temperature required for the vulcanization and to improve the properties of the vulcanizate. Suitable accelerators include, but are not limited to, amines, disulfides, guanidines, thioureas, thiazoles, thiurams, sulfenamides, dithicarbonates and zanthates. In some embodiments, the primary accelerator is a sulfenamide such as N,N-dicylohexyl-2-benzenethiazole sulfenamide. Any cobalt compound that can promote the adhesion of rubber to metal, such as stainless steel, may be used. Suitable cobalt compounds include, but are not limited to, cobalt salts of fatty acids and other carboxylic acids, such as stearic acid, palmitic, oleic, linoleic, and the like; cobalt salts of aliphatic or alicyclic carbocylic acids having 6 to 30 carbon atoms such as cobalt neodecanoate; cobalt salts of aromatic carbocylic acids such as cobalt naphthenate; cobalt halides such as cobalt chloride; and organo-cobalt-boron complexes such as MANOBOND^{®} 680C from OM Group, Inc., Cleveland, Ohio.

The silicone composition may be prepared by uniformly mixing the above-described components in a rubber mixer such as a two-roll mill, Banbury mixer, dough mixer or kneader and optionally effecting heat treatment under atmospheric pressure or in vacuum. In some embodiments, the silicone composition can be prepared by charging the ingredients into a kneading means such as a kneader and the mixture then kneaded at room temperature, and finally subjected to a heat treatment at about 100 °C to about 200 °C for about 15 minutes to about 8 hours. Alternatively, the ingredients can be mixed by a Banbury mixer at an elevated temperature such as about 160 °C or higher and the mixture can subsequently be cooled down to room temperature.

The silicone compositions disclosed herein can be used to prepare silicone articles by known polymer processing techniques such as extrusion, injection molding, rotational molding, and molding. In some embodiments, the silicone articles are prepared by injection molding using the silicone composition disclosed herein. In other embodiments, the silicone articles are prepared by extrusion using the silicone composition disclosed herein. In further embodiments, the silicone articles are prepared by molding using the silicone composition disclosed herein. In additional embodiments, the silicone articles are prepared by rotational molding using the silicone composition disclosed herein.

In general, injection molding is widely used for manufacturing a variety of plastic parts for various applications. In general, injection molding is a process by which a polymer is melted or softened and then injected at high pressure into a mold, which is the inverse of the desired shape, to form parts of the desired shape and size. The mold can be made from metal, such as steel and aluminum. The injection molding of polymers is described in Beaumont et al., "Successful Injection Molding: Process, Design, and Simulation," Hanser Gardner Publications, Cincinnati, Ohio (2002), which is incorporated herein by reference in its entirety.

In some embodiments, the silicone articles can be prepared from a silicone composition comprising a liquid silicone rubber (LSR) by the liquid injection molding (LIM) process. In some embodiments, the LSR can be pumped through pipelines and/or tubes to the mold equipment. In other embodiments, a two component LSR is pumped through a static mixer by a metering pump. The two component LSR generally comprises a catalyst and a reactant. The catalyst (Part A) can be introduced into the mixture prior to simultaneous with or subsequent to the addition of optional additives. The reactant (Part B) is generally an organohydrogensiloxane cross-linker which can be blended into the mixture simultaneous with or subsequent to the addition of optional additives, including crosslinking inhibitors if required. In the static mixer, the components are mixed uniformly and then transferred to a cooled metering section of the injection molding machine. In some embodiments, the ratio of Part A: Part B is from about 2:1 to about 1:2, from about 1.5:1 to about 1:1.5, from about 1.25:1 to about 1:1.25, from about 1.1:1 to about 1:1.1, or from about 1.05:1 to about 1:1.05. Other ratios may be used to alter the properties of the silicone product. In some embodiments, the ratio of Part A: Part B can be altered by reducing or increasing the amount of the filler. In other embodiments, to adjust the crosslinking properties, the ratio of Part A: Part B can be altered by increasing the amount of the catalyst such that the LSR will set faster and at lower temperatures. In further embodiments, the ratio of Part A: Part B can be altered by increasing the monomer content such that the LSR will set slower at a higher temperature. In still further embodiments, the silicone composition is cured at a temperature from about 50 °C to about 200 °C, or from about 70 °C to about 180 °C, for a suitable period of time dependent on the temperature, amount of crosslinking agents and inhibitors. In still further embodiments, the silicone composition is cured at a temperature from about 140 °C to about 160 °C.

In some embodiments, a reinforced material is embedded in the silicone composition disclosed herein. In other embodiments, the reinforced material can be in the form of a fiber sheet. When a fiber sheet is used, a non-stick plastic film may be used to separate the top and bottom molds before inserting the fiber sheet. The non-stick plastic film may be standard cellophane, plastic wrap, wax paper, MYLAR^{®}, polyethylene, PVC, PTFE, TEFLON^{®}, or the like. In further embodiments, a TEFLON^{®} sheet having a thickness of about 0.05 cm is used to separate the molds.

In some embodiments, the fiber sheets can be coated with a premixed liquid silicone AB. It is desirable that the premixed liquid silicone AB should be used immediately or refrigerated to increase its shelf life. A variety of commercially available roll coating and spray coating machines can be used. The sheet sizes can be varied according to amounts of coated sheet required and available materials. In one embodiment, a roll of fiberglass sheet is loaded into a z-type roll coating machine and then rolled through a bath of premixed liquid silicone AB. The machine speed and the size of bath can be used to adjust the coating time. Coating time may range from less than 1 minute to over 1 hour. Longer coating times are required for denser fiber weaves and thicker materials. Inversely, shorter coating times may be used with thin, open weaves. In one embodiment, the coating time is from about 6 minutes to about 18 minutes, or from about 10 minutes to about 14 minutes. In another embodiment, the coating time is from about 11 minutes to about 13 minutes. The coated fiber may be dried and then cut to a desirable size for incorporation into a variety of silicone articles.

In certain embodiments, the silicone composition comprises a silicone rubber and is placed in the metering section of the injection molding machine. Subsequently, the silicone composition in the metering section can be pushed through cooled sprue and runner systems into a heated cavity where the vulcanization of the silicone composition occur in the mold to form a molded article. In other embodiments, the molded article can be further post-cured to provide the desirable mechanical, chemical and physical properties. In further embodiments, the molded article can be cleaned with water and then dried.

Extrusion is a process by which a polymer is propelled continuously along a screw through regions of high temperature and pressure where it is melted and compacted, and finally forced through a die. The extrusion of polymers is described in C. Rauwendaal, "Polymer Extrusion", Hanser Publishers, New York, NY (1986); and M.J. Stevens, "Extruder Principals and Operation," Ellsevier Applied Science Publishers, New York, NY (1985), both of which are incorporated herein by reference in their entirety.

In some embodiments, the silicone composition disclosed herein may be extrusion molded and vulcanized into a silicone article. The silicone composition disclosed herein may comprise at least one additive disclosed herein. Extrusion molding and vulcanization of the silicone rubber composition may be carried out by any generally well-known extrusion and vulcanization methods. Some non-limiting examples of vulcanization methods include atmospheric hot-air vulcanization, continuous steam vulcanization, electron beam vulcanization, UHF (ultra-high frequency) vulcanization, and LCM (liquid curing medium) vulcanization. In certain embodiments, the vulcanization occurs at about 100 °C to about 500 °C for about 1 second to about 30 minutes. In other embodiments, the molded article can be further post-cured to provide the desirable mechanical, chemical and physical properties.

Molding is generally a process by which a polymer is melted and led into a mold, which is the inverse of the desired shape, to form parts of the desired shape and size. Molding can be pressureless or pressure-assisted. The molding of polymers is described in Hans-Georg Elias "An Introduction to Plastics," Wiley-VCH, Weinhei, Germany, pp. 161-165 (2003), which is incorporated herein by reference.

Rotational molding is a process generally used for producing hollow plastic products. By using additional post-molding operations, complex components can be produced as effectively as other molding and extrusion techniques. Rotational molding differs from other processing methods in that the heating, melting, shaping, and cooling stages all occur after the polymer is placed in the mold, therefore no external pressure is applied during forming. The rotational molding of polymers is described in Glenn Beall, "Rotational Molding : Design, Materials & Processing," Hanser Gardner Publications, Cincinnati, Ohio (1998), which is incorporated herein by reference in its entirety.

The silicone compositions disclosed herein can be used to prepared a variety of consumer and industrial products that can be found in every room of a typical home. For example, the consumer products include kitchen products, cooking products, baking products, food storage products and the like. In general, the silicone compositions disclosed herein can be used to prepare any silicone articles for household and industrial applications. Non-limiting examples of useful silicone articles include cookwares such as steamers; lids or covers such as tagine, steamer lids, pan lids or pot lids; gloves; bakewares such as baking pans, bread pans, cupcake pans and cookie pans; measuring cups; bowls; flower poachers; pots such as melting pots; grids such as handle grids, cup holder grids, can holder grids and bottle holder grids; colanders; pads such as microwave pads; mats such as chopping board mats and sink mats; spatulas; cake molds, jelly molds (e.g., JELL-O^{®} molds); ice trays; storage containers; gaskets or seals; heat shields; fire stops; cushions; insulation materials and the like.

In some embodiments, silicone articles such as steamers, tagines or lids can be prepared according to the following process which comprises the steps of (1) providing a silicone composition disclosed herein; (2) embedding in the silicone composition a reinforced material; and (3) effecting cross-linking of the silicone composition, wherein the reinforced material is embedded in the vulcanizable silicone composition before the cross-linking.

In certain embodiments, silicone articles such as steamers, tagines or lids can be prepared by the following process which comprises the steps of (a) providing a silicone composition; and (b) injecting the silicone composition into a mold of the silicone article disclosed herein. In other embodiments, the process further comprises the step of curing the silicone composition in the mold to form a silicone article. In further embodiments, the process further comprises the step of post-curing the silicone article.

The following examples are presented to exemplify embodiments of the invention. All numerical values are approximate. When numerical ranges are given, it should be understood that embodiments outside the stated ranges may still fall within the scope of the invention. Specific details described in each example should not be construed as necessary features of the invention.

### EXAMPLES

### Example 1

Example 1 is an embodiment of the silicone composition disclosed herein. Example 1 was prepared by mixing or milling a mixture of 98.4 wt.% of KE-571 (a silicone rubber; obtained from Shin-Etsu Chemical Co., Ltd., Tokyo, Japan), 1.5 wt.% of SKH-158B (a cross-linking agent; obtained from Shin-Etsu Chemical Co., Ltd., Tokyo, Japan), and 0.06 wt.% of SA101 and SB330 (both are colorants and were obtained from Holland Colours NV, Apeldoorn, the Netherlands). All the wt.% amounts are based on the total weight of Example 1.

### Example 2

Example 2 is another embodiment of the silicone composition disclosed herein. Example 2 was prepared by mixing or milling a mixture of 49.22 wt.% of KE-571 and 49.22 wt.% of MF-970U, (both are silicone rubbers and were obtained from Shin-Etsu Chemical Co., Ltd., Tokyo, Japan), 1.5 wt.% of SKH-158B (a cross-linking agent; obtained from Shin-Etsu Chemical Co., Ltd., Tokyo, Japan), and 0.06 wt.% of SA101 and SB330 (both are colorants and were obtained from Holland Colours NV, Apeldoorn, the Netherlands). All the wt.% amounts are based on the total weight of Example 2.

### Example 3 - Tagine

Example 3 is an embodiment of the tagine disclosed herein. Example 3 was prepared by an injection molding machine, which is commercially available from Zhen Cheng Liquid Silicone Injection Molding Machinery, Dongguan City, China. The mold had one tooling cavity and comprised an upper part and a lower part, which were kept shut during the injection-molding process. Before injection, the upper part and lower part of the mold were closed and heated to about 160 °C. Then Example 1 was placed into the storage or metering section and forced into the mold at a machine pressure of about 130 kg. Example 1 was allowed to cure inside the mold for about 250 seconds. After about 250 seconds, the mold was opened and the semi-finished tagine was taken out from the mold. Excess silicone rubber of the tagine was trimmed. The tagine was post-cured for about 4 hours at a temperature of about 205 °C ± 4 °C. The post-cured tagine was cleaned with pure water and then dried.

### Example 4 - Steamer Cover

Example 4 is an embodiment of the steamer cover disclosed herein. Example 4 was prepared by an injection molding machine, which is commercially available from Zhen Cheng Liquid Silicone Injection Molding Machinery, Dongguan City, China. The mold had two tooling cavities cavity and comprised an upper part and a lower part, which were kept shut during the injection-molding process. Before injection, the upper part and lower part were closed and heated respectively to about 160-165 °C and about 155-160 °C. Then Example 2 was placed into the storage or metering section and forced into the mold at a machine pressure of about 80 kg. Example 2 was allowed to cure inside the mold for about 130 seconds. After about 130 seconds, the mold was opened and the semi-finished steamer cover was taken out from the mold. Excess silicone rubber of the steamer cover was trimmed. The steamer cover was post-cured for about 4 hours at a temperature of about 205 °C ± 4 °C. The post-cured steamer cover was cleaned with pure water and dried.

### Example 5- Steamer Pan

Example 5 is an embodiment of the steamer disclosed herein. Example 5 was prepared by an injection molding machine, which is commercially available from Zhen Cheng Liquid Silicone Injection Molding Machinery, Dongguan City, China. The mold had two tooling cavities cavity and comprised an upper part and a lower part, which were kept shut during the injection-molding process. Before injection, the upper part and lower part were closed and heated to about 145 °C. Then Example 2 was placed into the storage or metering section and forced into the mold at a machine pressure of about 150 kg. Example 2 was allowed to cure inside the mold for about 250 seconds. After about 250 seconds, the mold was opened and the semi-finished steamer was taken out from the mold. Excess silicone rubber of the steamer was trimmed. The steamer was post-cured for about 4 hours at a temperature of about 205 °C ± 4 °C. The post-cured steamer was cleaned with pure water and dried.

While the invention has been described with respect to a limited number of embodiments, the specific features of one embodiment should not be attributed to other embodiments of the invention. No single embodiment is representative of all aspects of the invention. In some embodiments, the compositions or methods may include numerous compounds or steps not mentioned herein. In other embodiments, the compositions or methods do not include, or are substantially free of, any compounds or steps not enumerated herein. Variations and modifications from the described embodiments exist. The method of making the compositions may be described as comprising a number of acts or steps. These steps or acts may be practiced in any sequence or order unless otherwise indicated. Finally, any number disclosed herein should be construed to mean approximate, regardless of whether the word "about" or "approximately" is used in describing the number. The appended claims intend to cover all those modifications and variations as falling within the scope of the invention.

## Claims

1. A steamer comprising:
(a) a bottom portion comprising a front side, a back side and a plurality of openings; and
(b) a continuous wall around the periphery of the bottom portion and protruding upwardly from the front side of the bottom portion,
wherein the continuous wall comprises an outer surface, an inner surface and an upper edge and wherein the steamer comprises a silicone composition.

2. The steamer of claim 1, wherein the plurality of openings are in the shape of circles, ovals, triangles, squares, rhombi, rectangles, parallelograms, slits, pentagons, hexagons, octagons, crests or a combination thereof.

3. The steamer of claim 1, wherein the steamer further comprises a flange around the upper edge of the continuous wall.

4. The steamer of claim 1, wherein the steamer further comprises a base attached to the back side of the bottom portion.

5. The steamer of claim 4, wherein the base comprises a plurality of apertures.

6. The steamer of claim 1, wherein the steamer further comprises a plurality of supporting members attached to the back side of the bottom portion and the base.

7. The steamer of claim 1, wherein the bottom portion is circular in shape and each of the continuous wall and the base is independently cylindrical in shape.

8. The steamer of claim 1 further comprising a lid or a tagine.

9. The steamer of claim 8, wherein the lid further comprises a plurality of holes.

10. The steamer of claim 8, wherein the lid or tagine comprises a grip protruding upwardly from a central region of the lid or tagine.

11. The steamer of claim 8, wherein the upper surface of the lid or tagine further comprises a plurality of concentric rings.

12. The steamer of claim 8, wherein the outer surface of the continuous wall further comprises a plurality of rings.

13. The steamer of claim 1, wherein the silicone composition comprises a silicone rubber, a liquid silicone rubber, fluorosilicone rubber, silicone-modified ethylene propylene rubber, silicone polyester resin, silicone alkyd resin, silicone epoxy resin, or a combination thereof.

14. The steamer of claim 13, wherein the silicone composition further comprises a natural rubber, a synthetic rubber, a cross-linking agent, a catalyst, a filler, a reinforced material, a colorant, a filler, a dispersant, a surfactant, a wetting agent, a coupling agent, a lubricant, an accelerator, a rheology modifier, a thickener, an adhesion promoter, a , plasticizer, an age resister, an anti-oxidant, an anti-foaming agent, an anti-blocking agent, an anti-static agent, an anti-mildew agent, an acid acceptor, a UV stabilizer, a blowing agent, a fire retardant, a desiccant or a combination thereof.

15. A tagine comprising:
(a) a truncated cone-shaped cover portion comprising an outer surface and an inner surface; and
(b) a grip protruding upwardly from a central region of the cover portion,
wherein the outer surface comprises a plurality of concentric rings, and wherein the tagine comprises a silicone composition.

16. The tagine of claim 15, wherein the inner surface of the tagine comprises at least a lip concentric with the plurality of concentric rings.

17. The tagine of claim 15, wherein the ratio of the height of the tagine to the diameter of the outer edge of the tagine is from about 4:1 to about 1:4.

18. The tagine of claim 15, wherein the silicone composition comprises a silicone rubber, a liquid silicone rubber, fluorosilicone rubber, silicone-modified ethylene propylene rubber, silicone polyester resin, silicone alkyd resin, silicone epoxy resin, or a combination thereof.

19. The tagine of claim 18, wherein the silicone composition further comprises a natural rubber, a synthetic rubber, a cross-linking agent, a catalyst, a filler, a reinforced material, a colorant, a filler, a dispersant, a surfactant, a wetting agent, a coupling agent, a lubricant, an accelerator, a rheology modifier, a thickener, an adhesion promoter, a plasticizer, an age resister, an anti-oxidant, an anti-foaming agent, an anti-blocking agent, an anti-static agent, an anti-mildew agent, an acid acceptor, a UV stabilizer, a blowing agent, a fire retardant, a desiccant or a combination thereof.

20. A process of making a steamer comprising:
(a) providing a silicone composition; and
(b) injecting the silicone composition into a mold of the steamer,
wherein the steamer comprises a bottom portion comprising a front side, a back side and a plurality of openings; a continuous wall around the periphery of the bottom portion; and a base attached to the back side of the bottom portion.

21. The process of claim 20, wherein the silicone composition comprises a silicone rubber, a liquid silicone rubber, fluorosilicone rubber, silicone-modified ethylene propylene rubber, silicone polyester resin, silicone alkyd resin, silicone epoxy resin, or a combination thereof.

22. The process of claim 21, wherein the silicone composition further comprises a natural rubber, a synthetic rubber, a cross-linking agent, a catalyst, a filler, a reinforced material, a colorant, a filler, a dispersant, a surfactant, a wetting agent, a coupling agent, a lubricant, an accelerator, a rheology modifier, a thickener, an adhesion promoter, a plasticizer, an age resister, an anti-oxidant, an anti-foaming agent, an anti-blocking agent, an anti-static agent, an anti-mildew agent, an acid acceptor, a UV stabilizer, a blowing agent, a fire retardant, a desiccant or a combination thereof.

23. A process of making a tagine comprising:
(a) providing a silicone composition; and
(b) injecting the silicone composition into a mold of the tagine,
wherein the tagine comprises a truncated cone-shaped cover portion comprising an outer surface and an inner surface; and a grip protruding upwardly from a central region of the cover portion, and wherein the outer surface comprises a plurality of concentric rings.

24. The process of claim 23, wherein the silicone composition comprises a silicone rubber, a liquid silicone rubber, fluorosilicone rubber, silicone-modified ethylene propylene rubber, silicone polyester resin, silicone alkyd resin, silicone epoxy resin, or a combination thereof.

25. The process of claim 24, wherein the silicone composition further comprises a natural rubber, a synthetic rubber, a cross-linking agent, a catalyst, a filler, a reinforced material, a colorant, a filler, a dispersant, a surfactant, a wetting agent, a coupling agent, a lubricant, an accelerator, a rheology modifier, a thickener, an adhesion promoter, a plasticizer, an age resister, an anti-oxidant, an anti-foaming agent, an anti-blocking agent, an anti-static agent, an anti-mildew agent, an acid acceptor, a UV stabilizer, a blowing agent, a fire retardant, a desiccant or a combination thereof.
